# EUROPEAN PATENT SPECIFICATION

(11) **EP 3 001 768 B1**
(45) Date of publication and mention of the grant of the patent: **16.10.2019**
(21) Application number: 14800590.3
(22) Date of filing: 14.05.2014
(51) Int. Cl.: H04W 12/00, H04W 12/08, H04B 1/3816

(54) **SECURE ELEMENT (SE) OPERATING SYSTEM AND METHOD**
SECURE-ELEMENT (SE)-BETRIEBSSYSTEM UND -VERFAHREN
SYSTÈME ET PROCÉDÉ D'EXPLOITATION D'ÉLÉMENT SÉCURISÉ (SE)

(30) Priority: 22.05.2013 CN 201310191130
(43) Date of publication of application: 30.03.2016
(73) Proprietor: China Unionpay Co., Ltd, Shanghai 200135 (CN)
(72) Inventor: CHAI, Hongfeng, Shanghai 200135 (CN); LU, Zhijun, Shanghai 200135 (CN); HE, Shuo, Shanghai 200135 (CN); GUO, Wei, Shanghai 200135 (CN); ZHOU, Yu, Shanghai 200135 (CN); YU, Bin, Shanghai 200135 (CN)
(74) Representative: Schneider, Sascha
(86) International application number: PCT/CN2014/077461
(87) International publication number: WO 2014/187257

(56) References cited:
- EP-A1- 2 590 383
- EP-A2- 2 019 540
- CN-A- 1 741 658
- CN-A- 101 203 030
- CN-A- 101 355 758
- CN-A- 102 870 443
- US-A1- 2011 306 318
- US-A1- 2013 060 959

## Description

### FIELD OF THE INVENTION

The invention relates to a secure element on a mobile communication device, and in particular to a secure element operating system and method.

### BACKGROUND

An operating system of a conventional mobile communication system can not perform a uniform configuration and resource distribution on secure elements (SE) such as SIM card, smart SD card or the like, which would increase resource consumption of a processor of the device. Second, the SEs interacts with the device independently, which presents a safety hazard. On the other hand, the operations on each SE (e.g., addition or deletion on a mobile communication device) would decrease the convenience in operation. EP 2 019 540 A2 discloses a subscriber identity module indicative information display method. US 2013/0060959 A1 discloses methods for managing concurrent secure elements on a mobile device to coordinate with an application. US 2011/0306318 A1 discloses methods for provisioning wireless devices for operation in one or more networks. EP 2 590 383 A1 discloses a mobile device providing secure element data management features.

### SUMMARY OF THE INVENTION

The present invention is defined in the independent claims. Preferred embodiments are defined in the dependent claims. For example, a secure element (SE) operating system is disclosed, which comprises a SE configurator and a protocol converter disposed inside a mobile communication device, wherein the SE configurator communicates with one or more SEs on the mobile communication device via the protocol converter, and the SE configurator comprises a SE list for storing information on said one or more SEs.

Optionally, the SE configurator is used to acquire the information on said one or more SEs on the mobile communication device via the protocol converter, and to add the information to the SE list.

Optionally, the SE configurator verifies said one or more SEs before acquiring the information on said one or more SEs.

Optionally, the SE configurator is further configured to present the information on said one or more SEs via the mobile communication device based on the SE list.

Optionally, the SE configurator is further configured to delete the information on said one or more SEs based on the SE list.

Optionally, said one or more SEs is a physical SE or a virtual SE.

The secure element operating system further comprises a SE management backstage for forwarding information between the SE configurator and a trusted service management (TSM) platform.

The SE management backstage is used for acquiring the information on a designated SE from the SE configurator and sending the information on the designated SE to the TSM platform, the SE management backstage is further configured to receive download information on the designated SE from the TSM platform, and to forward the download information to the SE configurator, wherein the SE configurator is used for forwarding the download information to the corresponding designated SE via the protocol converter so that the designated SE can generate an application according to the download information.

The SE management backstage is further configured to communicate with the SE configurator, and to control the SE configurator to perform addition, verification, inquiry and deletion operations on the SE.

Optionally, the designated SE is designated by selecting SE in the SE list of the SE configurator.

For example, a secure element (SE) operating method is disclosed, which comprises the following steps: disposing a SE configurator and a protocol converter inside a mobile communication device; the SE configurator communicating with one or more SEs on the mobile communication device via the protocol converter, wherein the SE configurator comprises a SE list for storing information on said one or more SEs.

Optionally, the method further comprises the step of: the SE configurator acquiring the information on said one or more SEs on the mobile communication device via the protocol converter, and adding the information to the SE list.

Optionally, the method further comprises the step of: the SE configurator verifying said one or more SEs before acquiring the information on said one or more SEs.

Optionally, the method further comprises the step of: the SE configurator presenting the information on said one or more SEs via the mobile communication device based on the SE list.

Optionally, the method further comprises the step of: the SE configurator deleting the information on said one or more SEs based on the SE list.

Optionally, said one or more SEs is a physical SE or a virtual SE.

The method further comprises the step of: providing a SE management backstage for forwarding information between the SE configurator and a trusted service management (TSM) platform.

The method further comprises the step of: the SE management backstage acquiring the information on a designated SE from the SE configurator and sending the information on the designated SE to the TSM platform, the SE management backstage receiving download information on the designated SE from the TSM platform, and forwarding the download information to the SE configurator, and the SE configurator forwarding the download information to the corresponding designated SE via the protocol converter so that the designated SE can generate an application according to the download information.

The SE management backstage further communicates with the SE configurator, and controls the SE configurator to perform addition, verification, inquiry and deletion operations on the SE.

Optionally, the designated SE is designated by selecting SE in the SE list of the SE configurator.

### BRIEF DESCRIPTION OF THE DRAWINGS

Those skilled in the art will comprehend various aspects of the invention more clearly after reading the specific embodiments of the invention with reference to the accompanying drawings. It will be appreciated by those skilled in the art that the drawings are merely used for explaining the technical solutions of the invention in connection with the specific embodiments, and are not intended to limit the scope of protection of the invention.
Fig. 1 is a schematic view of the secure element operating system according to an embodiment of the invention.
Fig. 2 is a schematic view of the secure element operating system according to another embodiment of the invention.

### DETAILED DESCRIPTION OF THE UTILITY MODEL

Herein, the secure element (SE) refers to an independent module having computing and storing functions, in which respective functions are designed so as to protect the safety of the stored data and provide corresponding secure mechanism service for use by external devices. The SE can for example comprise real physical hardware elements such as SIM card, smart SD card or the like, or virtual elements.

The specific embodiments of the invention will be further described in detail hereinafter with reference to the accompanying drawings. In the following description, for an illustrative purpose, many specific details are described so as to provide a thorough understanding of one or more aspects of the embodiments. However, it is obvious to those skilled in the art that one or more aspects of various embodiments can be implemented with these specific details provided to a less degree. Therefore, the following description should not be considered as limiting; rather, the scope of protection is defined by the appended claims.

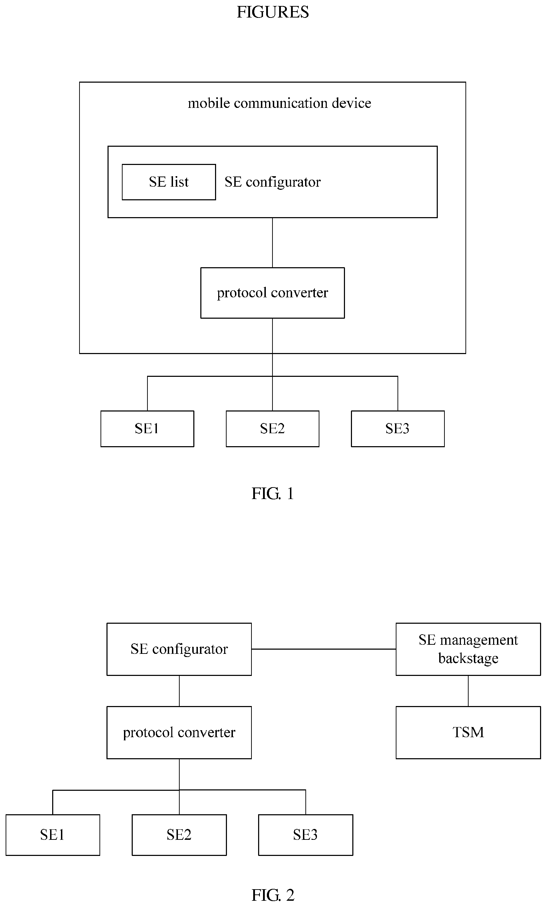

Fig. 1 is a schematic view of the secure element operating system according to an embodiment of the invention. As shown in Fig. 1, the secure element operating system according to the invention comprises a SE configurator and a protocol converter. The SE configurator and the protocol converter can be disposed inside a mobile communication device. The SE configurator communicates with one or more SEs on the mobile communication device via the protocol converter, and the SE configurator comprises a SE list for storing information on one or more SEs. While Fig. 1 shows three SEs, those skilled in the art will understand that the number of SEs can be more than three or less than three.

The SE configurator can be used to acquire the information on said one or more SEs on the mobile communication device via the protocol converter, and to store the information in the SE list (add SE). The one or more SEs can be a physical SE (e.g., SIM card, SD card) or a virtual SE established by the operating system of the device.

The SE configurator can verify the one or more SEs connected to the mobile communication device before acquiring the information on said one or more SEs. The SE that fails the verification cannot be added to the SE list.

The SE configurator can be also configured to present the information on the one or more SEs via the mobile communication device based on the SE list so as to facilitate the user in inquiring SE information.

The SE configurator can be also configured to delete the information on the one or more SEs based on the SE list so as to perform logout of SE in the mobile communication device.

Those skilled in the art may understand that the SE configurator can be implemented as a functional module added into the mobile communication device.

Fig. 2 is a schematic view of the secure element operating system according to another embodiment of the invention. As shown, the secure element operating system may further comprise a SE management backstage which can be used forwarding information between the SE configurator and a trusted service management (TSM) platform. For example, the SE management backstage can be used for acquiring the information on a designated SE from the SE configurator and send the information on the designated SE to the TSM platform. The SE management backstage can be further configured to receive download information on the designated SE from the TSM platform, and to forward the download information to the SE configurator. At this time, the SE configurator is used for forwarding the download information to the corresponding designated SE via the protocol converter so that the designated SE can generate an application according to the download information.

The SE management backstage can be further configured to communicate with the SE configurator, and to control the SE configurator to perform addition, verification, inquiry and deletion operations on the SE.

Herein, the trusted service management (TSM) refers to a technology for realizing a plurality of applications on one SE. In the prior art, the TSM platform can issue various smart card applications or the like remotely for users. That is, users can download applications from a remote TSM platform.

In this embodiment, the designated SE can be designated by selecting SE in the SE list of the SE configurator.

According to the invention, the SE configurator and the protocol converter are disposed inside the mobile communication device, and the secure element management backstage is provided outside, whereby the configuration and resource distribution are realized for the secure element and a basic service is provided to the device. By doing so, resource consumption of the device can be reduced and safety is improved, and meanwhile, a uniform invoking service of the SE is provided for a higher level application of the device and the convenience of using SE is increased.

Through the description of the above embodiments, those skilled in the art will understand that various modifications and variations can be also made to the specific embodiments of the invention without departing from the scope of the invention. All these modifications and variations will fall within the scope defined by the appended claims of the invention.

## Claims

1. A secure element, SE, operating system comprising a SE configurator and a protocol converter disposed inside a mobile communication device, wherein,
the SE configurator communicates with one or more SEs on the mobile communication device via the protocol converter,
the SE configurator comprises a SE list for storing information on said one or more SEs, **characterized in that** the system further comprises a SE management backstage provided outside the mobile communication device for forwarding information between the SE configurator and a trusted service management, TSM, platform, wherein the SE management backstage is used for acquiring the information on a designated SE from the SE configurator and sending the information on the designated SE to the TSM platform, the SE management backstage is further configured to receive download information on the designated SE from the TSM platform, and to forward the download information to the SE configurator, and the SE configurator is used for forwarding the download information to the corresponding designated SE via the protocol converter so that the designated SE can generate an application according to the download information, wherein the SE management backstage is further configured to communicate with the SE configurator, and to control the SE configurator to perform addition, verification, inquiry and deletion operations on the SE.

2. The system according to claim 1, **characterized in that** the SE configurator is used to acquire the information on said one or more SEs on the mobile communication device via the protocol converter, and to add the information to the SE list,
the SE configurator is further configured to present the information on said one or more SEs via the mobile communication device based on the SE list, and
the SE configurator is further configured to delete the information on said one or more SEs based on the SE list.

3. The system according to claim 2, **characterized in that** the SE configurator verifies said one or more SEs before acquiring the information on said one or more SEs.

4. The system according to claim 1, **characterized in that** said one or more SEs is a physical SE or a virtual SE.

5. A system according to claim 1, **characterized in that** the designated SE is designated by selecting SE in the SE list of the SE configurator.

6. A secure element, SE, operating method, comprising the following steps:
disposing a SE configurator and a protocol converter inside a mobile communication device,
the SE configurator communicating with one or more SEs on the mobile communication device via the protocol converter, wherein
the SE configurator comprises a SE list for storing information on said one or more SEs, **characterized by** further comprising the step of:
providing a SE management backstage provided outside the mobile communication device, and using the SE management backstage for forwarding information between the SE configurator and a trusted service management, TSM, platform, wherein further comprising the step of:
the SE management backstage acquiring the information on a designated SE from the SE configurator and sending the information on the designated SE to the TSM platform, the SE management backstage receiving download information on the designated SE from the TSM platform, and forwarding the download information to the SE configurator, and the SE configurator forwarding the download information to the corresponding designated SE via the protocol converter so that the designated SE can generate an application according to the download information, wherein the SE management backstage further communicates with the SE configurator, and controls the SE configurator to perform addition, verification, inquiry and deletion operations on the SE.

7. A method according to claim 6, **characterized by** further comprising the steps of:
the SE configurator acquiring the information on said one or more SEs on the mobile communication device via the protocol converter, and adding the information to the SE list;
the SE configurator presenting the information on said one or more SEs via the mobile communication device based on the SE list; and
the SE configurator deleting the information on said one or more SEs based on the SE list.

8. A method according to claim 7, **characterized by** further comprising the step of:
the SE configurator verifying said one or more SEs before acquiring the information on said one or more SEs.

9. A method according to claim 6, **characterized in that** said one or more SEs is a physical SE or a virtual SE.

10. A method according to claim 7, **characterized in that** the designated SE is designated by selecting SE in the SE list of the SE configurator

## Patentansprüche

1. Secure Element-, SE-, Betriebssystem, umfassend einen SE-Konfigurator und einen Protokollkonverter, die innerhalb eines mobilen Kommunikationsgeräts angeordnet sind, wobei der SE-Konfigurator mit einem oder mehreren SEs auf dem mobilen Kommunikationsgerät über den Protokollkonverter kommuniziert, der SE-Konfigurator eine SE-Liste zum Speichern von Informationen auf dem einen oder den mehreren SEs umfasst, **dadurch gekennzeichnet, dass** das System ferner ein SE-Management Backstage umfasst, das außerhalb des mobilen Kommunikationsgeräts bereitgestellt wird, zum Weiterleiten von Informationen zwischen dem SE-Konfigurator und einer Trusted Service Management-, TSM-, Plattform, wobei das SE-Management Backstage zum Erfassen der Informationen auf einem bestimmten SE von dem SE-Konfigurator verwendet wird, und zum Senden der Informationen auf dem bestimmten SE zu der TSM-Plattform, wobei das SE-Management Backstage ferner zum Empfang von Download-Informationen auf dem bestimmten SE von der TSM-Plattform konfiguriert ist, und zum Senden dieser Download-Informationen zu dem SE-Konfigurator, und der SE-Konfigurator wird verwendet, um die Download-Informationen zu dem entsprechenden bestimmten SE über den Protokollkonverter weiterzuleiten, so dass das bestimmte SE eine Anwendung gemäß den Download-Informationen generieren kann, wobei das SE-Management Backstage ferner konfiguriert ist, um mit dem SE-Konfigurator zu kommunizieren, und um den SE-Konfigurator zu steuern, so dass er Arbeitsschritte des Zufügens, Verifizierens, Abfragens und Löschens auf dem SE durchführt.

2. System nach Anspruch 1, **dadurch gekennzeichnet, dass** der SE-Konfigurator verwendet wird, um Informationen zu dem einen oder den mehreren SEs auf dem mobilen Kommunikationsgerät über den Protokollkonverter zu erfassen, und um diese Informationen der SE-Liste zuzufügen, der SE-Konfigurator ferner konfiguriert ist, um die Informationen auf dem einen oder den mehreren SEs über das mobile Kommunikationsgerät basierend auf der SE-Liste darzustellen, und der SE-Konfigurator ferner konfiguriert ist, die Informationen auf dem einen oder den mehreren SEs basierend auf der SE-Liste zu löschen.

3. System nach Anspruch 2, **dadurch gekennzeichnet, dass** der SE-Konfigurator das eine oder die mehreren SEs verifiziert, bevor die Informationen auf dem einen oder den mehreren SEs erfasst werden.

4. System nach Anspruch 1, **dadurch gekennzeichnet, dass** das eine oder die mehreren SEs ein physisches SE oder ein virtuelles SE sind.

5. System nach Anspruch 1, **dadurch gekennzeichnet, dass** das bestimmte SE durch Auswahl des SEs in der SE-Liste des SE-Konfigurators bestimmt wird.

6. Betriebsverfahren für ein Secure Element, SE, umfassend die folgenden Schritte:
Anordnen eines SE-Konfigurators und eines Protokollkonverters innerhalb eines mobilen Kommunikationsgeräts, wobei der SE-Konfigurator mit einem oder mehreren SEs auf dem mobilen Kommunikationsgerät über den Protokollkonverter kommuniziert, wobei der SE-Konfigurator eine SE-Liste zum Speichern von Informationen auf dem einen oder den mehreren SEs umfasst, **dadurch gekennzeichnet,**
**dass** es ferner den folgenden Schritt umfasst:
Bereitstellen eines SE-Management Backstage, das außerhalb des mobilen Kommunikationsgeräts bereitgestellt ist, und Verwenden des SE Management Backstage, um Informationen zwischen dem SE-Konfigurator und einer Trusted Service Management-, TSM-, Plattform weiterzuleiten, wobei es ferner den folgenden Schritt umfasst:
das SE-Management Backstage erfasst die Informationen auf einem bestimmten SE von dem SE-Konfigurator und sendet die Informationen auf dem bestimmten SE zu der TSM-Plattform, das SE-Management Backstage empfängt Download-Informationen auf dem bestimmten SE von der TSM-Plattform und leitet die Download-Informationen an den SE-Konfigurator weiter, und der SE-Konfigurator leitet die Download-Informationen an das entsprechende bestimmte SE über den Protokollkonverter weiter, so dass das bestimmte SE eine Anwendung gemäß den Download-Informationen generieren kann, wobei
das SE-Management Backstage ferner mit dem SE-Konfigurator kommuniziert und den SE-Konfigurator steuert, so dass dieser Arbeitsschritte des Zufügens, des Verifizierens, des Abfragens und des Löschens auf dem SE durchführt.

7. Verfahren nach Anspruch 6, **dadurch gekennzeichnet, dass** es ferner die folgenden Schritte umfasst:
der SE-Konfigurator erfasst die Informationen auf dem einen oder den mehreren SEs auf dem mobilen Kommunikationsgerät über den Protokollkonverter und fügt die Informationen der SE-Liste hinzu;
der SE-Konfigurator stellt die Informationen auf dem einen oder den mehreren SEs über das mobile Kommunikationsgerät basierend auf der SE-Liste dar; und der SE-Konfigurator löscht die Informationen auf dem einen oder den mehreren SEs basierend auf der SE-Liste.

8. Verfahren nach Anspruch 7, **dadurch gekennzeichnet, dass** es ferner den folgenden Schritt umfasst:
der SE-Konfigurator überprüft das eine oder die mehreren SEs, bevor er die Informationen auf dem einen oder den mehreren SEs erfasst.

9. Verfahren nach Anspruch 6, **dadurch gekennzeichnet, dass** das eine oder die mehreren SEs ein physisches SE oder ein virtuelles SE sind.

10. Verfahren nach Anspruch 7, **dadurch gekennzeichnet, dass** das bestimmt SE durch Auswahl des SE in der SE-Liste des SE-Konfigurators bestimmt wird.

## Revendications

1. Système d'exploitation d'un élément sécurisé (SE) comprenant un configurateur et un convertisseur de protocole disposé à l'intérieur d'un dispositif de communication mobile, dans lequel, le configurateur SE communique avec au moins un SE sur le dispositif de communication mobile par l'intermédiaire du convertisseur de protocole, le configurateur SE comprend une liste de SE destinée au stockage d'informations dudit au moins un SE, **caractérisé en ce que** le système comprend en outre une coulisse de gestion de SE montée à l'extérieur du dispositif de création mobile permettant d'acheminer des informations entre le configurateur SE et une plate-forme de gestion de services de confiance, TSM, dans lequel la coulisse de gestion de SE est utilisé pour l'acquisition des informations sur un SE désigné provenant du configurateur SE et l'envoi des informations sur le SE désigné à la plate-forme de TSM, la coulisse de gestion de SE est en outre conçue pour recevoir des informations de téléchargement sur le SE désigné provenant de la plate-forme de TSM, et d'acheminer les informations de téléchargement au configurateur SE, et le configurateur SE est utilisé pour l'acheminement des informations de téléchargement au SE désigné correspondant par l'intermédiaire du convertisseur de protocole de sorte que le SE désigné puisse générer une application conformément aux informations de téléchargement, dans lequel la coulisse de gestion de SE est en outre conçue pour communiquer avec le configurateur SE, et pour commander le configurateur SE afin qu'il effectue des opérations d'addition, de vérification, de demande et de suppression sur le SE.

2. Système selon la revendication 1, **caractérisé en ce que** le configurateur SE est utilisé pour acquérir les informations sur ledit au moins un SE sur le dispositif de communication mobile par l'intermédiaire du convertisseur de protocole, et pour ajouter les informations à la liste de SE, le configurateur SE est en outre conçu pour présenter les informations sur ledit au moins un SE par l'intermédiaire du dispositif de communication mobile en fonction de la liste de SE, et le configurateur SE est en outre conçu pour supprimer les informations sur ledit au moins un SE en fonction de la liste de SE.

3. Système selon la revendication 2, **caractérisé en ce que** le configurateur SE vérifie ledit au moins un SE avant l'acquisition des informations sur ledit au moins un SE.

4. Système selon la revendication 1, **caractérisé en ce que** ledit au moins un SE est un SE physique ou un SE virtuel.

5. Système selon la revendication 1, **caractérisé en ce que** le SE désigné est désigné en choisissant un SE dans la liste de SE du configurateur SE.

6. Procédé d'exploitation d'un élément sécurisé, SE, comprenant les étapes suivantes :
la disposition d'un configurateur SE et d'un convertisseur de protocole à l'intérieur d'un dispositif de communication mobile,
le configurateur SE communiquant avec au moins un SE sur le dispositif de communication mobile par l'intermédiaire du convertisseur de protocole, dans lequel
le configurateur SE comprend une liste de SE destinée au stockage d'informations dudit au moins un SE, **caractérisé en ce que** le système comprend en outre les étapes consistant à :
obtenir une coulisse de gestion de SE située à l'extérieur du dispositif de communication mobile, et utiliser la coulisse de gestion de SE pour l'acheminement des informations entre le configurateur SE et une plate-forme de gestion de services de confiance, TSM, comprenant en outre les étapes comprenant :
la coulisse de gestion de SE effectuant l'acquisition des informations sur un SE désigné provenant du configurateur SE et l'envoi des informations sur le SE désigné à la plate-forme de TSM, la coulisse de gestion de SE recevant des informations de téléchargement sur le SE désigné à partir de la plate-forme de TSM, et l'acheminement des informations de téléchargement au configurateur SE, et le configurateur SE effectuant l'acheminement des informations de téléchargement au SE désigné correspondant par l'intermédiaire du convertisseur de protocole de sorte que le SE désigné puisse générer une application conformément aux informations de téléchargement, dans lequel
la coulisse de gestion de SE communique en outre avec le configurateur SE, et commande le configurateur SE afin qu'il effectue des opérations d'addition, de vérification, de demande et de suppression sur le SE.

7. Procédé selon la revendication 6, **caractérisé en ce qu'**il comprend en outre les étapes comprenant :
le configurateur SE effectuant l'acquisition des informations sur ledit au moins un SE sur le dispositif de communication mobile par l'intermédiaire du convertisseur de protocole, et l'ajout des informations à la liste de SE ;le configurateur SE présentant les informations sur ledit au moins un SE par l'intermédiaire du dispositif de communication mobile en fonction de la liste de SE ; et le configurateur SE supprimant les informations sur ledit au moins un SE en fonction de la liste de SE.

8. Procédé selon la revendication 7, **caractérisé en ce qu'**il comprend en outre l'étape comprenant :
le configurateur SE vérifiant ledit au moins un SE avant l'acquisition des informations sur ledit au moins un SE.

9. Procédé selon la revendication 6, **caractérisé en ce que** ledit au moins un SE est un SE physique ou un SE virtuel.

10. Procédé selon la revendication 7, **caractérisé en ce que** le SE désigné est désigné en choisissant un SE dans la liste de SE du configurateur SE.
